# EUROPEAN PATENT APPLICATION

(11) **EP 4 620 723 A1**
(43) Date of publication of application: **24.09.2025**
(21) Application number: 23890109.4
(22) Date of filing: 22.05.2023
(51) Int. Cl.: B60L 53/20, H02J 7/04, H02M 5/12

(54) **ON-BOARD CHARGER AND CONTROL METHOD THEREFOR**

(30) Priority: 16.11.2022 CN 202211460016
(71) Applicant: Sungrow Power Supply Co., Ltd., Hefei, Anhui 230088 (CN)
(72) Inventor: WANG, Hao, Hefei, Anhui 230088 (CN)
(74) Representative: Epping - Hermann - Fischer
(86) International application number: PCT/CN2023/095481
(87) International publication number: WO 2024/103665

(57) **Abstract**

An on-board charger control method, wherein a transformer side of an AC/AC conversion circuit (30) is connected to an alternating current side of an AC/DC conversion circuit (40) by means of a transformer (10), so that an on-board charger is of a single-stage structure; in a stable state, an instantaneous sampling value of a grid-side current is equal to an instantaneous reference value thereof, and the instantaneous reference value of the grid-side current is determined by means of the phase of an instantaneous sampling value of a grid-side voltage and a reference peak value of the grid-side current, so that the on-board charger has a PFC function; a battery-side charging power is indirectly controlled by means of controlling the grid-side current, so that the on-board charger has a battery-side voltage and current control function; phase shift control on the two conversion circuits enables power devices in the two conversion circuits to achieve soft switching, and the single-stage structure allows currents to flow through fewer devices, thus improving efficiency; and therefore, by using the single-stage structure, the present invention efficiently achieves the PFC function and the battery-side voltage and current control function of two-stage isolated on-board chargers. Further disclosed is an on-board charger.

## Description

The present application claims priority to Chinese Patent Application No.202211460016.1, titled "ON-BOARD CHARGER AND CONTROL METHOD THEREFOR", filed on November 16, 2022 with the China National Intellectual Property Administration, which is incorporated herein by reference in its entirety.

### FIELD

The present disclosure relates to the technical field of power electronics, and in particular to an on-board charger and a method for controlling the on-board charger.

### BACKGROUND

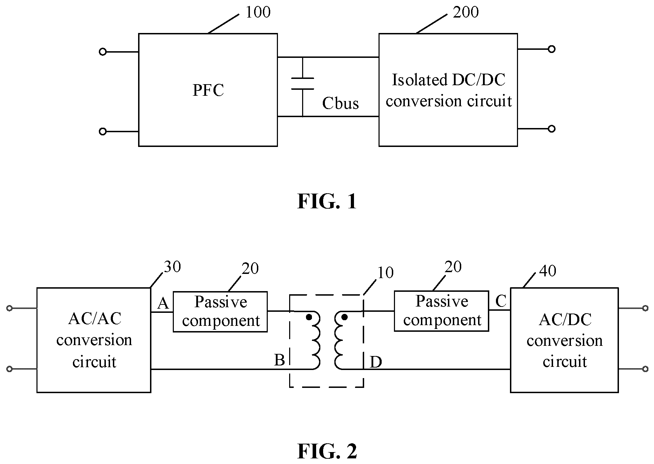

At present, a two-stage isolated on-board charger is widely applied in practice and may also be referred to as a two-stage structure. A detailed structure of the two-stage isolated on-board charger may be shown in FIG. 1. The isolated two-stage structure includes a PFC (Power Factor Correction) circuit and an isolated DC/DC conversion circuit. The PFC circuit is configured to correct a power factor of a grid current and maintain stability of a voltage between two electrodes of a direct-current bus Cbus. The isolated DC/DC conversion circuit is configured to control a battery-side voltage or battery-side current of the on-board charger to implement the charging process of a battery.

In general, the two-stage isolated on-board charger requires a relatively large number of power components, resulting in an increase of the overall cost of the on-board charger. In order to reduce the overall cost of the on-board charger, a single-stage isolated on-board charger may be arranged, which may also be referred to as a single-stage structure.

Therefore, how to enable the single-stage isolated on-board charger to function as the two-stage isolated on-board charger to efficiently achieve the PFC function and control the battery-side voltage or battery-side current is an issue urgently addressed.

### SUMMARY

In views of the above issue, an on-board charger and a method for controlling an on-board charger are provided according to the present disclosure, to enable the single-stage isolated on-board charger to function as the two-stage isolated on-board charger to efficiently achieve the PFC function and control the battery-side voltage or battery-side current.

In order to achieve the objectives described above, the following technical solutions are provided according to embodiments of the present disclosure.

In a first aspect of the present disclosure, a method for controlling an on-board charger is provided. In the on-board charger, a transformer side of a controllable bridge-type AC/AC conversion circuit is connected to an alternating-current side of a controllable bridge-type AC/DC conversion circuit through a transformer. The method for controlling the on-board charger includes:
regulating a reference peak value of a grid-side current of the on-board charger based on a deviation of a sampled value of a battery-side voltage relative to a reference value of the battery-side voltage;
converting the reference peak value of the grid-side current into an instantaneous reference value of the grid-side current based on a phase of an instantaneous sampled value of the grid-side voltage of the on-board charger;
performing phase-shift control on the two conversion circuits based on the instantaneous reference value of the grid-side current, the instantaneous sampled value of the grid-side voltage and the sampled value of the battery-side voltage, where the phase-shift control is for controlling power components in the two conversion circuits to achieve soft-switching; and
correcting the phase-shift control based on a deviation of the instantaneous sampled value of the grid-side current relative to the instantaneous reference value of the grid-side current.

In an embodiment, the phase-shift control includes:
determining a phase-shift angle of an output voltage of the transformer side of the AC/AC conversion circuit and a phase-shift angle of an output voltage of the alternating-current side of the AC/DC conversion circuit based on the instantaneous reference value of the grid-side current, the instantaneous sampled value of the grid-side voltage, the sampled value of the battery-side voltage, a switching frequency of the on-board charger and an equivalent total reactance of all passive components in the on-board charger;
generating respective drive signals for the two conversion circuits based on the two phase-shift angles; and
driving the two conversion circuits to perform power conversion based on the respective drive signals for the two conversion circuits.

In an embodiment, the determining a phase-shift angle of an output voltage of the transformer side of the AC/AC conversion circuit and a phase-shift angle of an output voltage of the alternating-current side of the AC/DC conversion circuit includes:
determining the phase-shift angle of the output voltage of the transformer side of the AC/AC conversion circuit and a relationship between the two phase-shift angles based on the instantaneous reference value of the grid-side current, the instantaneous sampled value of the grid-side voltage, the sampled value of the battery-side voltage, the switching frequency of the on-board charger and the equivalent total reactance of all the passive components in the on-board charger, where the phase-shift angle of the output voltage of the transformer side of the AC/AC conversion circuit is within a range for controlling the power components in the two conversion circuits to achieve the soft switching; and
determining the phase-shift angle of the output voltage of the alternating-current side of the AC/DC conversion circuit based on the phase-shift angle of the output voltage of the transformer side of the AC/AC conversion circuit and the relationship between the two phase-shift angles

In an embodiment, the correcting the phase-shift control based on a deviation of the instantaneous sampled value of the grid-side current relative to the instantaneous reference value of the grid-side current includes:
correcting at least one of phase-shift angles in the phase shift control.

In an embodiment, the reference value of the battery-side voltage is equal to a charging voltage of a battery connected to the on-board charger under a constant voltage trickle charging condition.

In an embodiment, the regulating a reference peak value of a grid-side current of the on-board charger based on a deviation of a sampled value of a battery-side voltage relative to a reference value of the battery-side voltage includes:
regulating a reference value of a battery-side current based on the deviation of the sampled value of the battery-side voltage relative to the reference value of the battery-side voltage; and
regulating the reference peak value of the grid-side current based on a deviation of a sampled value of the battery-side current relative to the reference value of the battery-side current.

In an embodiment, the reference value of the battery-side current is less than or equal to a charging current of a battery connected to the on-board charger under a constant current charging condition.

In an embodiment, the charging current of the battery under the constant current charging condition is determined based on an operating state of the on-board charger and a user instruction.

In a second aspect of the present disclosure, an on-board charger is provided. The on-board charger includes a controller, a transformer, at least one passive component, a controllable bridge-type AC/AC conversion circuit and a controllable bridge-type AC/DC conversion circuit.

A transformer side of the AC/AC conversion circuit is connected to an alternating-current side of the AC/DC conversion circuit through the transformer; a grid side of the AC/AC conversion circuit serves as a grid side of the on-board charger, and a direct-current side of the AC/DC conversion circuit serves as a battery side of the on-board charger.

A primary side and/or a secondary side of the transformer is provided with the at least one passive component, and each of the at least one passive component at least includes an inductor.

Both the AC/AC conversion circuit and the AC/DC conversion circuit are controlled by the controller. The controller is configured to perform the method for controlling the on-board charger according to any one of the first aspect of the present disclosure.

In an embodiment, the AC/AC conversion circuit is implemented by a half-bridge topology or a full-bridge topology, and the AC/DC conversion circuit is implemented by a half-bridge topology or a full-bridge topology.

In an embodiment, the at least one passive component includes an inductor branch, and the inductor branch includes at least one inductor. In response to the number of the at least one inductor being greater than 1, the inductors are connected in series, connected in parallel, or connected in series and parallel.

In an embodiment, the at least one passive component further includes a capacitor branch. The capacitor branch is connected in series or connected in parallel with the inductor branch. The capacitor branch includes at least one capacitor. In response to the number of the at least one capacitor is greater than 1, the capacitors are connected in series, connected in parallel, or connected in series and parallel.

In an embodiment, a switching frequency of the on-board charger is greater than a resonant frequency of a resonant cavity in the on-board charger.

In an embodiment, the on-board charger further includes two filters.

One of the two filters is arranged at the grid side of the AC/AC conversion circuit, and the other filter is arranged at the direct-current side of the AC/DC conversion circuit.

It can be seen from the above technical solutions, a method for controlling an on-board charger is provided according to the present disclosure. In the method for controlling the on-board charger, the transformer side of the AC/AC conversion circuit is connected to the alternating-current side of the AC/DC conversion circuit through the transformer, and the on-board charger is a single-stage isolated on-board charger. Furthermore, the instantaneous sampled value of the grid-side current is equal to instantaneous reference value of the grid-side current if the on-board charger stably operates, and the instantaneous reference value of the grid-side current is determined based on the phase of the instantaneous sampled value of the grid-side voltage and the reference peak value of the grid-side current. Therefore, the on-board charger has the PFC function. In addition, a battery-side charging power is indirectly controlled by controlling the grid-side current, and thus the on-board charger has the function for controlling the battery-side voltage and the battery-side current. Furthermore, the phase-shift control is performed on the two conversion circuits, the power components in the two conversion circuits can achieve soft switching by the phase-shift control, the single-stage isolated on-board charger reduces the number of components through which current flows, improving efficiency of the on-board charger. In summary, with the method for controlling the on-board charger, the single-stage isolated on-board charger can function as the two-stage isolated on-board charger to efficiently achieve the PFC function and control the battery-side voltage or battery-side current.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only embodiments of the present disclosure, and other drawings may be obtained by those skilled in the art from the drawings without any creative work.
FIG. 1 is a schematic structural diagram of an two-stage isolated on-board charger according to the conventional technology;
FIG. 2 is a schematic structural diagram of an on-board charger according to an embodiment of the present disclosure;
FIG. 3 and FIG. 4 are respective flowcharts of a method for controlling an on-board charger according to two embodiments of the present disclosure;
FIG. 5 is a schematic diagram of a control loop of an on-board charger according to an embodiment of the present disclosure;
FIG. 6 is a fundamental wave equivalent circuit of an on-board charger according to an embodiment of the present disclosure;
FIG. 7 is a schematic diagram of power transmission vectors in FIG. 6;
FIG. 8a and FIG. 8b are respective schematic diagrams of a simulation test result of a grid-side voltage and a simulation test result of a grid-side current;
FIG. 8c and FIG. 8d are respective schematic diagrams of a simulation test result of a battery-side voltage and a simulation test result of a battery-side current;
FIG. 9 is a flowchart of phase-shift control according to an embodiment of the present disclosure;
FIG. 10 is a schematic diagram of a control loop of an on-board charger according to another embodiment of the present disclosure;
FIG. 11a is a schematic diagram of drive signals for two conversion circuits of an on-board charger during a positive half cycle of a power grid according to an embodiment of the present disclosure;
FIG. 11b is a schematic diagram of drive signals for two conversion circuits of an on-board charger during a negative half cycle of a power grid according to an embodiment of the present disclosure;
FIG. 12a is a schematic diagram of drive signals for two conversion circuits of an on-board charger during a positive half cycle of a power grid according to another embodiment of the present disclosure;
FIG. 12b is a schematic diagram of drive signals for two conversion circuits of an on-board charger during a negative half cycle of a power grid according to another embodiment of the present disclosure;
FIG. 13a and FIG. 13b are respective schematic structural diagrams of a half-bridge cyclo conversion circuit and a full-bridge cyclo conversion circuit;
FIG. 13c and FIG. 13d are respective schematic structural diagrams of a half-bridge rectification circuit and a full-bridge rectification circuit;
FIG. 14 is a flowchart of phase-shift control according to another embodiment of the present disclosure; and
FIG. 15 is a schematic structural diagram of an on-board charger according to another embodiment of the present disclosure.

### DETAILED DESCRIPTION

The solutions in the embodiments of the present disclosure will be described clearly and completely hereinafter in conjunction with the drawings in the embodiments of the present disclosure. It is apparent that the described embodiments are only a part of the embodiments of the present disclosure rather than all of the embodiments. Based on the embodiments of the present disclosure, all other embodiments obtained by those skilled in the art without any creative work fall within the protection scope of the present disclosure.

The relationship terminologies such as "first" and "second" herein are only used to distinguish one entity or operation from another, rather than to necessitate or imply that the actual relationship or order exists between the entities or operations. Moreover, the terms "comprises", "includes", or any other variation are intended to cover a non-exclusive inclusion such that a process, method, article, or apparatus comprising a set of elements includes not only those elements but also other elements not expressly listed, and may also include elements inherent to such a process, method, article, or apparatus. Unless expressively limited, the statement "including a..." does not exclude the case that other similar elements may exist in the process, method, article or device including the series of elements.

In order to improve the efficiency of the single-stage isolated on-board charger and to enable the single-stage isolated on-board charger to have the PFC function, a method for controlling an on-board charger is provided according to embodiments of the present disclosure.

As shown in FIG 2, the on-board charger includes a transformer 10, an AC/AC conversion circuit 30 and an AC/DC conversion circuit 40. A transformer side of the AC/AC conversion circuit 30 is connected to an alternating-current side of the AC/DC conversion circuit 40 through the transformer 10. A primary side and/or a secondary side of the transformer 10 is provided with a passive component 20, and each passive component 20 at least includes an inductor. Both the AC/AC conversion circuit 30 and the AC/DC conversion circuit 40 are implemented by controllable bridge-type topologies.

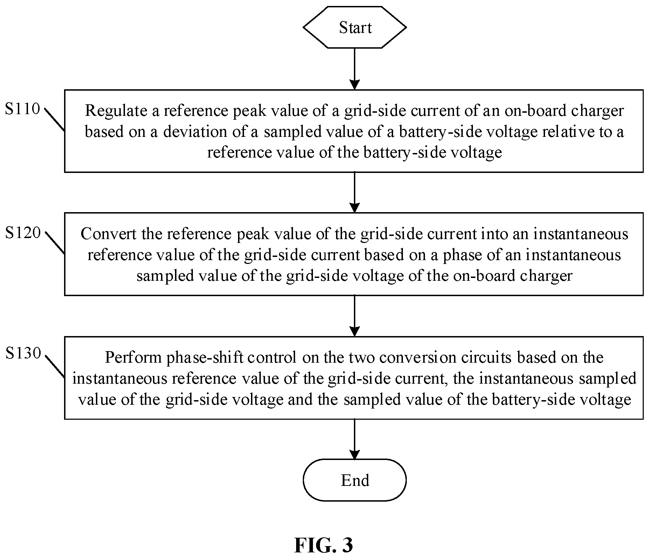

The flow of the method for controlling the on-board charger is shown in FIG. 3, and includes the following steps S110 to S130.

In step S110, a reference peak value of a grid-side current of the on-board charger is regulated based on a deviation of a sampled value of a battery-side voltage relative to a reference value of the battery-side voltage.

The reference peak value of the grid-side current is a reference value of a peak value of the grid-side current. The reference value of the battery-side voltage is equal to a charging voltage of a battery connected to the on-board charger under a constant voltage trickle charging condition. It should be noted that, the charging voltage is normally not regulated.

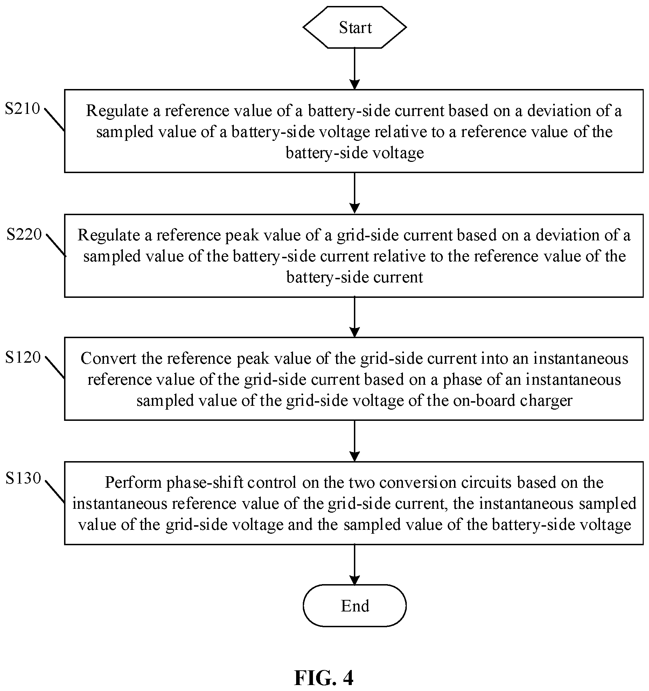

In practice, as shown in FIG. 4, the implementation of step S110 includes the following steps S210 and S220.

In step S210, a reference value of a battery-side current is regulated based on the deviation of the sampled value of the battery-side voltage relative to the reference value of the battery-side voltage.

The reference value of the battery-side current is less than or equal to a charging current of the battery connected to the on-board charger under a constant current charging condition. In practice, the charging current is determined based on an operating state of the on-board charger and a user instruction. Therefore, the charging current may be regulated based on the operating state of the on-board charger and the user instruction.

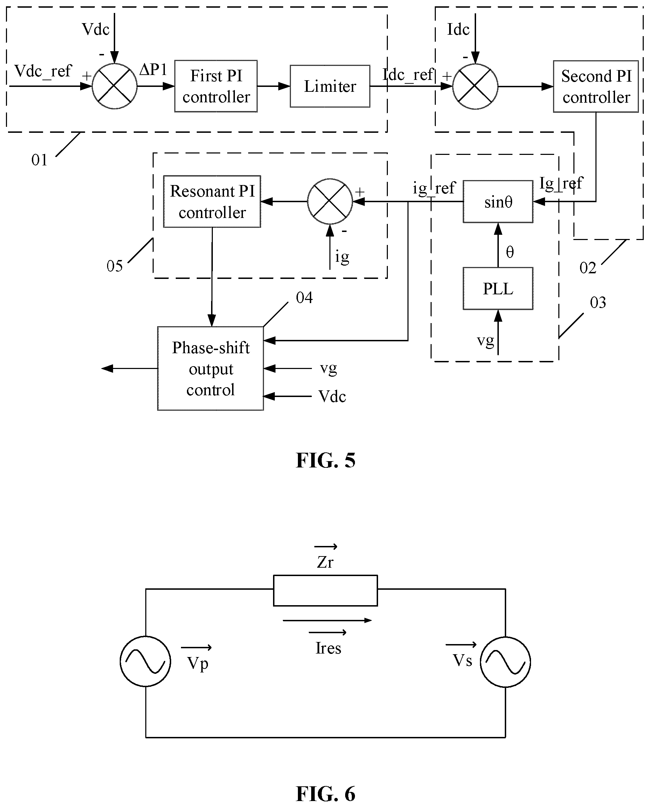

In practice, the step S210 corresponding to a control loop 01 shown in FIG. 5. The control loop 01 includes a first PI controller and a limiter. Moreover, a limiting value of the limiter is equal to the charging current under the constant current charging condition, where, Vdc_ref represents the reference value of the battery-side voltage, Vdc represents the sampled value of the battery-side voltage, and Idc_ref represents the reference value of the battery-side current.

In step S220, the reference peak value of the grid-side current is regulated based on a deviation of a sampled value of the battery-side current relative to the reference value of the battery-side current.

In practice, the step S220 corresponding to a control loop 02 shown in FIG. 5. The control loop 02 includes a second PI controller. Idc represents the sampled value of the battery-side current, and Ig_ref represents the reference peak value of the grid-side current.

It can be seen from steps S210 and S220 that during an initial charging phase, a voltage of the battery is very insufficient and a terminal voltage of the battery is relatively low, the sampled value of the battery-side voltage is much less than the reference value of the battery-side voltage. The regulated reference value of the battery-side current is always equal to the charging current of the battery under the constant current charging condition, so that the battery operates under the constant current charging condition. As the battery is gradually fully charged, the terminal voltage of the battery increases continuously and becomes slightly greater than the reference value of the battery-side voltage. The regulated reference value of the battery-side current becomes to be less than the charging current under the constant current charging condition, and gradually decreases. Ultimately, the sampled value of the battery-side voltage is stabilized at the reference value of the battery-side voltage, so that the battery operates under the constant voltage trickle charging condition.

In step S120, the reference peak value of the grid-side current is converted into an instantaneous reference value of the grid-side current based on a phase of an instantaneous sampled value of the grid-side voltage of the on-board charger.

The instantaneous reference value of the grid-side current is a reference value of an instantaneous value of the grid-side current.

In practice, the step S120 corresponding to a control loop 03 shown in FIG. 5. The control loop 03 includes a PLL (Phase Locked Loop) and a parameter conversion link. vg represents the instantaneous sampled value of the grid-side voltage, θ represents the phase of the instantaneous sampled value of the grid-side voltage, sin θ represents a transfer function of the parameter conversion link, and ig_ref represents the instantaneous reference value of the grid-side current.

In step S130, phase-shift control is performed on the two conversion circuits based on the instantaneous reference value of the grid-side current, the instantaneous sampled value of the grid-side voltage and the sampled value of the battery-side voltage.

In the phase-shift control, a phase-shift angle of an output voltage of a transformer side of the AC/AC conversion circuit and a phase-shift angle of an output voltage of the alternating-current side of the AC/DC conversion circuit are regulated, that is, a phase difference of the two output voltages is regulated, thus controlling the power transmission of the on-board charger. Moreover, the power components in the two conversion circuits can achieve soft switching during the above modification process. The phase-shift control is described in detail in the following embodiments, which is not repeated herein.

In practice, the step S130 corresponding to a control loop 04 shown in FIG. 5, and the detailed control process of the control loop is explained in the following embodiments, which is not repeated herein.

The process of controlling the power transmission of the on-board charger by the phase difference of the two output voltages is described in detail as follows.

The fundamental wave equivalent analysis is performed on the on-board charger, to obtain an equivalent circuit of the on-board charger, as shown in FIG. 6. In FIG. 6, the output voltage of the transformer side of the AC/AC conversion circuit is characterized by a fundamental component *̅V̅p̅*̅ of the output voltage *̅V̅A̅B̅*̅ of the transformer side of the AC/AC conversion circuit, and the output voltage of the alternating-current side of the AC/DC conversion circuit is characterized by the fundamental component *̅V̅s̅*̅ of the output voltage *̅V̅C̅D̅*̅ of the alternating-current side of the AC/DC conversion circuit. In practice, *V̅p̅ =* |*Vp*|∠α - β/2 , *̅V̅s̅*̅ = |*Vs*|∠0°, where β/2 represents the phase-shift angle of the fundamental component *̅V̅p̅*̅ , α represents the phase-shift angle of the output voltage of the transformer side of the AC/AC conversion circuit, and β represents the phase-shift angle of the output voltage of the alternating-current side of the AC/DC conversion circuit.

In addition, in FIG. 6, Z̅r̅ represents an equivalent total reactance of all passive components, and is expressed as *Z̅r̅ =* |*Zr*|∠90°. *̅I̅r̅e̅s̅*̅ represents the current flowing through the above equivalent total reactance, that is, the current flowing through the transformer.

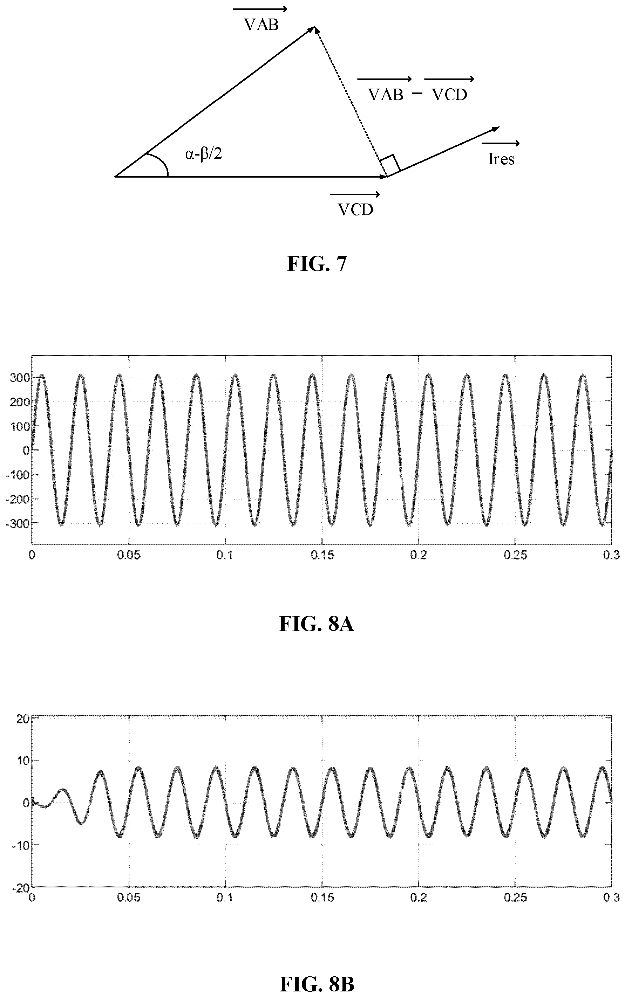

Based on the above equivalent circuit, a power transmission vector diagram is obtained and shown in FIG. 7. It can be seen from FIG. 7 that a module and argument of the voltage *V̅A̅B̅ - V̅C̅D̅* across the above equivalent total reactance change accordingly with the change of α and β, and thus a module and argument of *̅I̅r̅e̅s̅*̅ also change accordingly. Therefore, a magnitude and direction of the current flowing through the equivalent total reactance can be controlled by modifying α and β, thus controlling a direction and magnitude of a transmitted power of the on-board charger, that is, controlling the power transmission of the on-board charger.

It should be noted that if the phase-shift angle of the output voltage of the transformer side of the AC/AC conversion circuit is positive, it indicates that the phase of the output voltage of the transformer side of the AC/AC conversion circuit after phase shift is ahead of a phase with the phase-shift angle of zero. Otherwise, it indicates that the phase of the output voltage of the transformer side of the AC/AC conversion circuit after phase shift lags behind the phase with the phase-shift angle of zero. If the phase-shift angle of the output voltage of the alternating-current side of the AC/DC conversion circuit is negative, it indicates that the phase of the output voltage of the alternating-current side of the AC/DC conversion circuit after phase shift lags behind the phase with the phase-shift angle of zero. Otherwise, it indicates that the phase of the output voltage of the alternating-current side of the AC/DC of the AC/DC conversion circuit after phase shift is ahead of the phase with the phase-shift angle of zero.

In step S140, the phase-shift control is corrected based on the deviation of the instantaneous sampled value of the grid-side current relative to the instantaneous reference value of the grid-side current.

In practice, the step S 140 corresponding to a control loop 05 shown in FIG. 5. The control loop 05 includes a resonant PI controller, where ig represents the instantaneous sampled value of the grid-side current.

In practice, the phase-shift control is corrected by correcting the phase-shift angle of the output voltage of the transformer side of the AC/AC conversion circuit; correcting the phase-shift angle of the output voltage of the alternating-current side of the AC/DC conversion circuit; or, correcting both the phase-shift angle of the output voltage of the transformer side of the AC/AC conversion circuit and the phase-shift angle of the output voltage of the alternating-current side of the AC/DC conversion circuit, which is not limited herein, depending on the actual situation.

In the method for controlling the on-board charger, the transformer side of the AC/AC conversion circuit is connected to the alternating-current side of the AC/DC conversion circuit through the transformer, and the on-board charger is a single-stage isolated on-board charger. Furthermore, the instantaneous sampled value of the grid-side current is equal to instantaneous reference value of the grid-side current if the on-board charger stably operates, and the instantaneous reference value of the grid-side current is determined based on the phase of the instantaneous sampled value of the grid-side voltage and the reference peak value of the grid-side current. Therefore, the grid-side current and the grid-side voltage are in phase, that is, the on-board charger has the PFC function. In addition, the phase-shift control is performed on the two conversion circuits, the power components in the two conversion circuits can achieve soft switching by the phase-shift control, and the single-stage isolated on-board charger reduces the number of components through which current flows, improving efficiency of the on-board charger. In summary, with the method for controlling the on-board charger, the single-stage isolated on-board charger can function as the two-stage isolated on-board charger to efficiently achieve the PFC function and control the battery-side voltage or battery-side current.

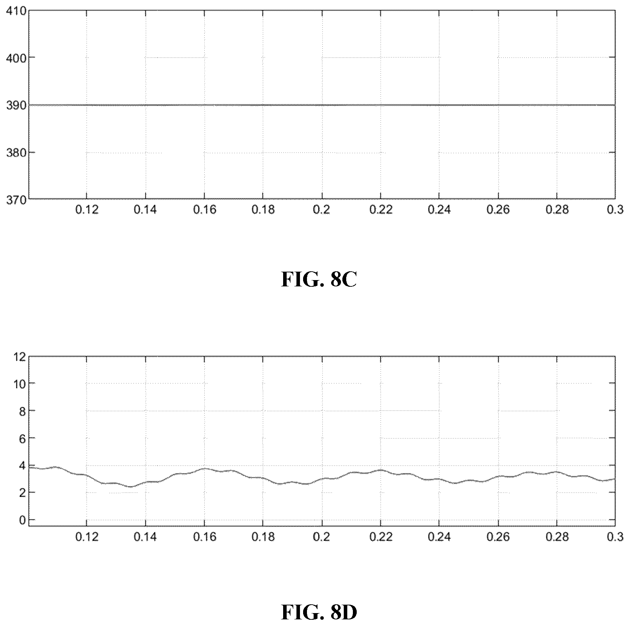

In order to verify the effectiveness of the method for controlling the on-board charger according to the present disclosure, a simulation test is performed on the on-board charger with the method. FIG. 8a, FIG. 8b, FIG. 8c and FIG. 8d show test results. It can be seen from FIG. 8a and FIG. 8b that the grid-side voltage and the grid-side current are opposite in phase, thus implementing the control of a grid-side power factor and the grid-side current. It can be seen from FIG. 8c and FIG. 8d that the on-board charger charges the battery based on a preset battery-side voltage and a preset battery-side current.

It should be noted that a simulated THD (Total Harmonic Distortion) is 2% shown in FIG. 8a and FIG. 8b.

It should be noted that the on-board charger includes the transformer, the controllable bridge-type AC/AC conversion circuit and the controllable bridge-type AC/DC conversion circuit, and the transformer side of the AC/AC conversion circuit is connected to the alternating-current side of the AC/DC conversion circuit through the transformer, so that the on-board charger includes a few power components, thus reducing the overall cost of the on-board charger. In addition, since the on-board charger includes the few power components, reducing the control input, thereby reducing the control cost of the on-board charger. In addition, the on-board charger is not provided with an electrolytic bus capacitor, further reducing the overall cost of the on-board charger, and reducing the overall volume of the on-board charger and extending the service life of the on-board charger.

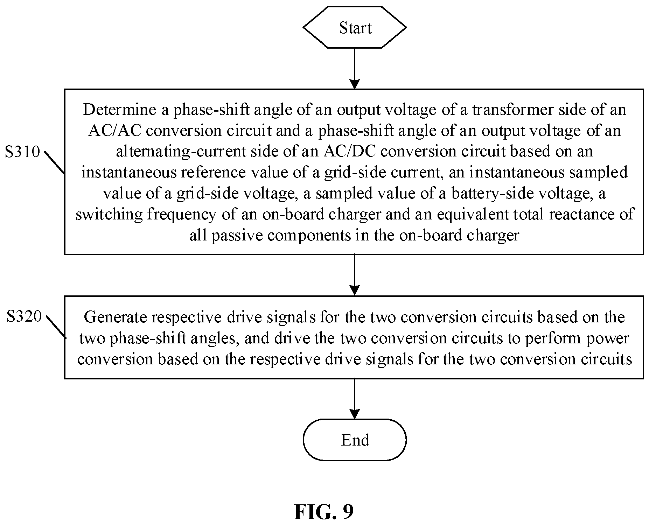

In another embodiment of the present disclosure, the process of phase-shift control is described in detail, and FIG. 9 is a flowchart of the phase-shift control. The process includes the following steps S310 and S320.

In step S310, a phase-shift angle of the output voltage of the transformer side of the AC/AC conversion circuit and a phase-shift angle of the output voltage of the alternating-current side of the AC/DC conversion circuit are determined based on the instantaneous reference value of the grid-side current, the instantaneous sampled value of the grid-side voltage, the sampled value of the battery-side voltage, a switching frequency of the on-board charger and an equivalent total reactance of all passive components in the on-board charger.

The switching frequency of the on-board charger is an operating frequency of switching transistors of the two conversion circuits in the on-board charger.

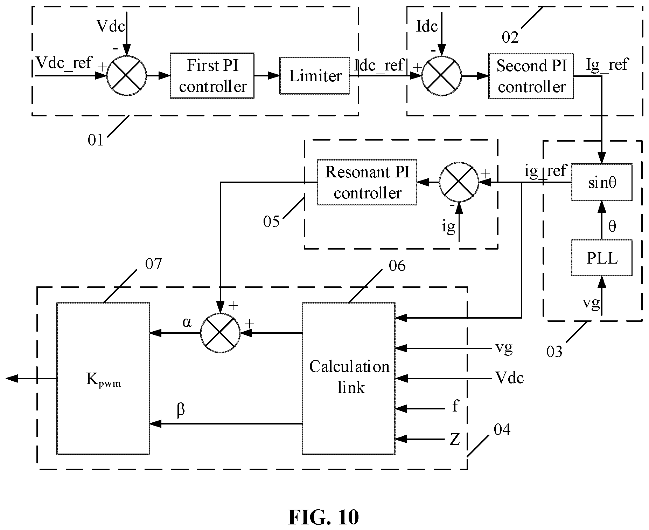

In practice, the step S310 corresponding to a control loop shown as a calculation link 06 in FIG. 10, where f represents the switching frequency of the on-board charger, Z represents the equivalent total reactance, α represents the phase-shift angle of the output voltage of the transformer side of the AC/AC conversion circuit, and β represents the phase-shift angle of the output voltage of the alternating-current side of the AC/DC conversion circuit.

In step S320, respective drive signals for the two conversion circuits are generated based on the two phase-shift angles. The two conversion circuits are driven to perform power conversion based on the respective drive signals for the two conversion circuits.

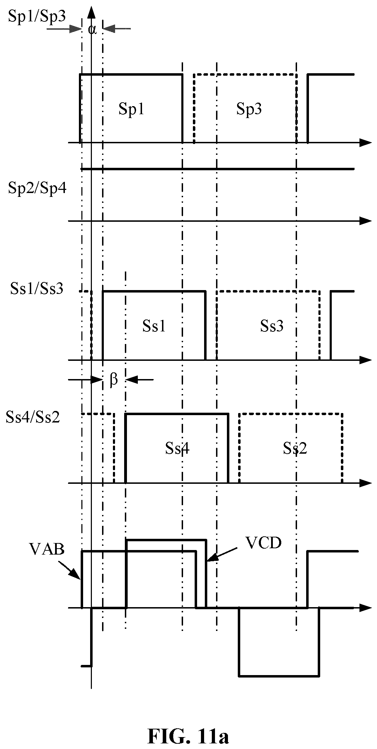

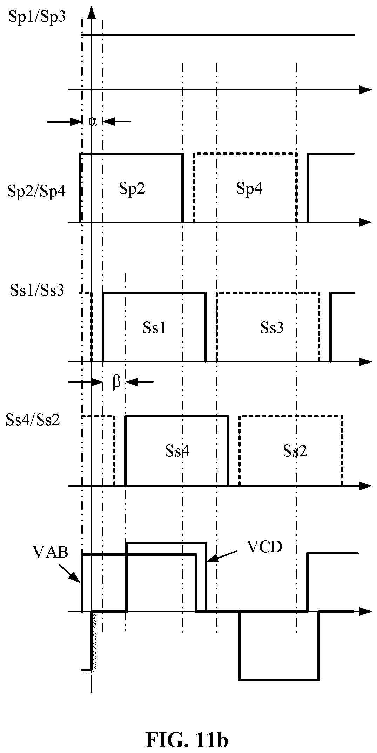

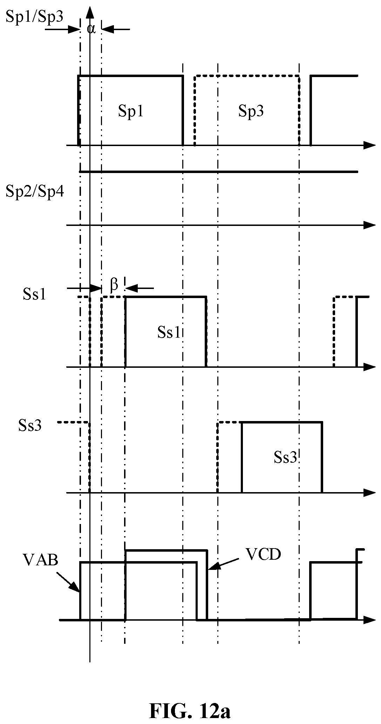

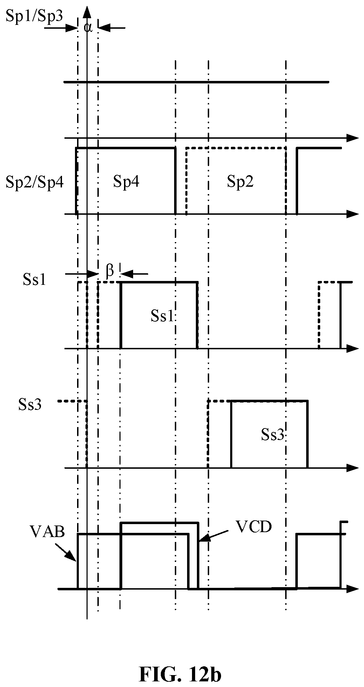

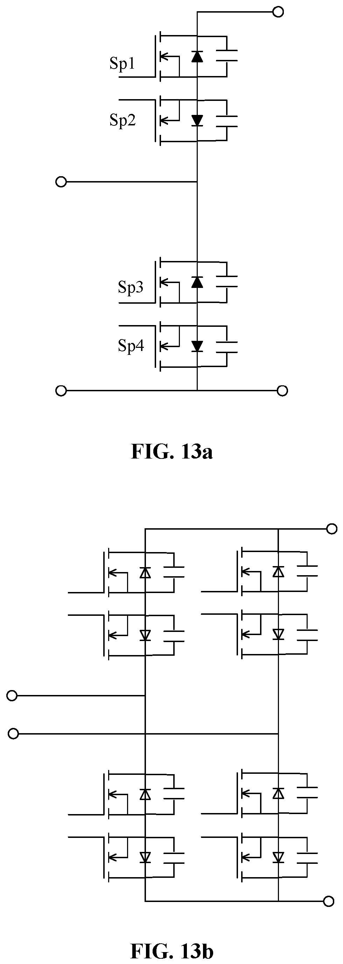

In a case that the AC/AC conversion circuit adopts a half-bridge topology, for example, as shown in FIG. 13a, the drive signals for Sp1 to Sp4 are shown in FIG. 11a, FIG. 11b, FIG. 12a and FIG. 12b. During a positive half cycle of the power grid, Sp1 and Sp3 are turned on or off frequently, and Sp2 and Sp4 are always on, as shown in FIG. 11a and FIG. 12a (FIG. 11a and FIG. 12a show the drive signals for the switching transistors Sp1 to Sp4 in the circuit shown in FIG 13a). During a negative half cycle of the power grid, Sp2 and Sp4 are turned on or off frequently, and Sp1 and Sp3 are always on, as shown in FIG. 11b and FIG. 12b (FIG. 11b and FIG. 12b show the drive signals for the switching transistors Sp1 to Sp4 in the circuit shown in FIG 13a).

In a case that the AC/AC conversion circuit adopts a full-bridge topology, for example, as shown in FIG. 13b, the semiconductor components on opposite sides of the two bridge arms (that is, an upper side of one bridge arm and a lower side of the other bridge arm) adopts the same drive signal, to extend the driver of the half-bridge topology.

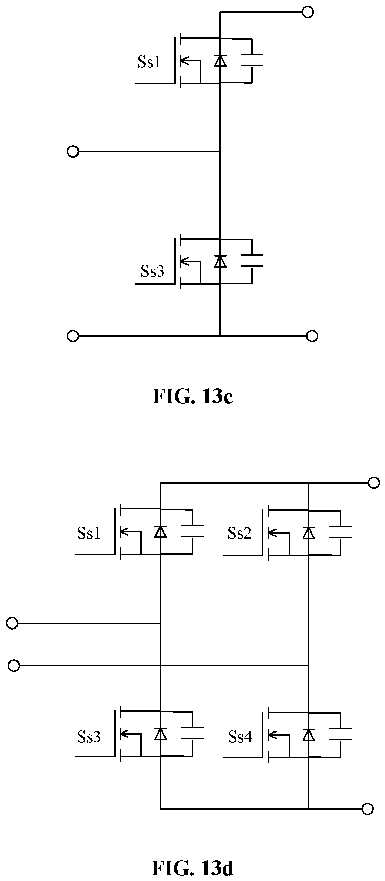

In a case that the AC/DC conversion circuit adopts a half-bridge topology, for example, as shown in FIG. 13c, the drive signals for Ss1 and Ss3 are shown in FIG. 12a or FIG. 12b (FIG. 12a and FIG. 12b show the drive signals for the switching transistors Ss1 and Ss3 in the circuit shown in FIG. 13c), and Ss1 and Ss3 are alternately turned on.

In a case that the AC/DC conversion circuit adopts a full-bridge topology, for example, as shown in FIG. 13d, the drive signals for Ss1 to Ss4 are shown in FIG. 11a or FIG. 11b (FIG. 11a and FIG. 11b show the drive signals for the switching transistors Ss1 to Ss4 in the circuit shown in FIG. 13d). A group of switching transistors including Ss1 and Ss4 and another group of switching transistors including Ss2 and Ss3 are turned on alternately, where Ss1 is turned on earlier than Ss4, and Ss3 is turned on earlier than Ss2.

In practice, the step S330 corresponding to a control loop shown as a PWM generator 07 in FIG. 10, where Kpwm represents a transfer function of the PWM generator.

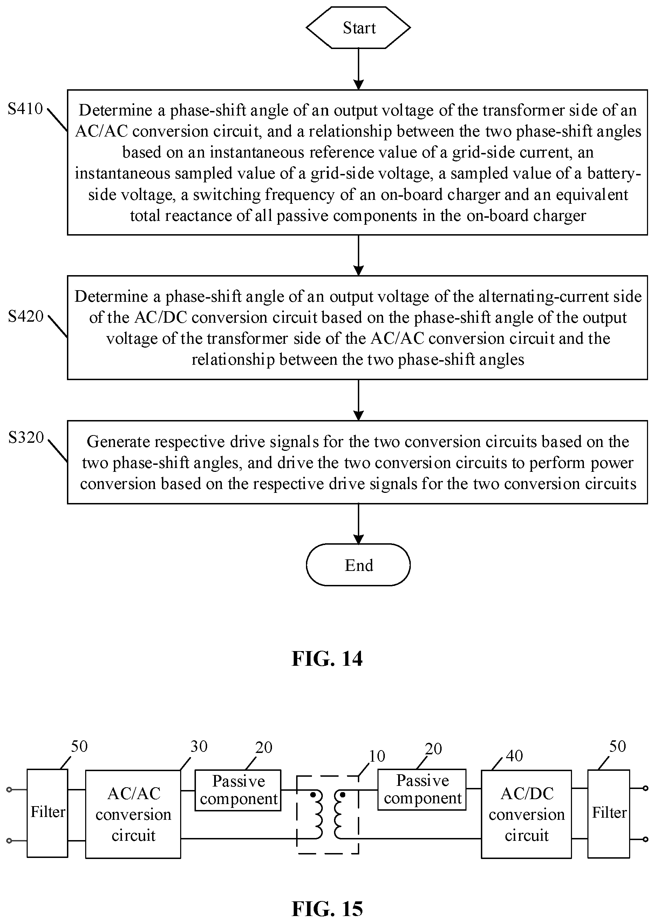

In an embodiment, the detailed process of step S310 is described, and FIG. 14 is a flowchart of the detailed process. The process includes following steps S410 and S420.

In step S410, the phase-shift angle of the output voltage of the transformer side of the AC/AC conversion circuit, and a relationship between the two phase-shift angles are determined based on the instantaneous reference value of the grid-side current, the instantaneous sampled value of the grid-side voltage, the sampled value of the battery-side voltage, the switching frequency of the on-board charger and the equivalent total reactance of all the passive components in the on-board charger.

The phase-shift angle of the output voltage of the transformer side of the AC/AC conversion circuit is within a range for controlling the power components in the two conversion circuits to achieve the soft switching.

In step S420, the phase-shift angle of the output voltage of the alternating-current side of the AC/DC conversion circuit is determined based on the phase-shift angle of the output voltage of the transformer side of the AC/AC conversion circuit and the relationship between the two phase-shift angles.

In another embodiment of the present disclosure, an on-board charger is provided. A detailed structure of the on-board charger is as shown in FIG. 2. The on-board charger includes a controller (the controller is not shown in FIG. 2 for simplify view), a transformer 10, at least one passive component 20 (where two passive components 20 are shown as an example in FIG. 2), and a controllable bridge-type AC/AC conversion circuit 30 and AC/DC conversion circuit 40. All the components are connected as follows.

The transformer side of the AC/AC conversion circuit 30 is connected to the alternating-current side of the AC/DC conversion circuit 40 through the transformer 10. A grid side of the AC/AC conversion circuit 30 serves as a grid side of the on-board charger and is connected to a power supply, in general, to a power grid. A direct-current side of the AC/DC conversion circuit 40 serves as a battery side of the on-board charger and is connected to a charging interface of a vehicle.

A primary side and/or a secondary side of the transformer 10 is provided with a passive component 20. Each passive component 20 at least includes an inductor. Both the AC/AC conversion circuit 30 and the AC/DC conversion circuit 40 are controlled by the controller. The controller is configured to perform the method for controlling the on-board charger according to the above embodiments.

In an embodiment, the controllable bridge-type AC/AC conversion circuit 30 is implemented by a half-bridge topology, such as the circuit shown in FIG. 13a, or implemented by a full-bridge topology, such as the circuit shown in FIG. 13b, which is not limited herein. All implementations fall within the protection scope of the present disclosure. The controllable bridge-type AC/DC conversion circuit 40 is implemented by a half-bridge topology, such as the circuit shown in FIG. 13c, or implemented by a full-bridge topology, such as the circuit shown in FIG. 13d, which is not limited herein. All implementations fall within the protection scope of the present disclosure.

In practice, the controllable bridge-type AC/AC conversion circuit 30 is a half-bridge cyclo conversion circuit or a full-bridge cyclo conversion circuit. In practice, the controllable bridge-type AC/AC conversion circuit 30 is not limited herein, depending on the actual situation. All implementations fall within the protection scope of the present disclosure.

In practice, the controllable bridge-type AC/DC conversion circuit 40 is a half-bridge rectification circuit or a full-bridge rectification circuit. In practice, the controllable bridge AC/DC conversion circuit 40 is not limited herein, depending on the actual situation. All implementations fall within the protection scope of the present disclosure.

In an embodiment, the passive component 20 is provided. The passive component 20 includes an inductor branch. The inductor branch includes at least one inductor. If the number of the at least one inductor is greater than 1, the inductors are connected in series, connected in parallel, or connected in series and parallel.

In another embodiment, the passive component 20 is provided. The structure is shown in FIG. 2 (FIG. 2 shows each passive component including one capacitor and one inductor). On the basis of the above embodiment, the passive component 20 further includes a capacitor branch. The capacitor branch is connected in series or in parallel with the inductor branch. In addition, the capacitor branch includes at least one capacitor. If the number of the at least one capacitor is greater than 1, the capacitors are connected in series, connected in parallel, or connected in series and parallel.

In practice, in a case that the passive component 20 includes a inductor and a capacitor, and resonance occurs in the on-board charger, the switching frequency of the on-board charger is greater than a resonant frequency of a resonant cavity in the on-board charger, so as to further achieve the soft switching of the switching transistors in the AC/AC conversion circuit 30 and the AC/DC conversion circuit 40.

In another embodiment, the on-board charger is provided, a detailed structure is shown in FIG. 15. On the basis of the above embodiment, the on-board charger further includes two filters. One of the two filters is arranged at the grid side of the AC/AC conversion circuit 30, and the other filter is arranged at the direct-current side of the AC/DC conversion circuit 40.

Based on the above description of the disclosed embodiments, the features documented in the various embodiments in this specification may be substituted or combined with each other to enable those skilled in the art to implement or use the present disclosure. Merely preferred embodiments of the present disclosure are described above and the present disclosure is not limited thereto. Although the present disclosure is disclosed as above with preferred embodiments, which are not intended to limit the present disclosure. For those skilled in the art, many variations, modifications or equivalent replacements may be made to the technical solutions of the present disclosure by using the methods and technical contents disclosed above, without departing from the scope of the technical solutions of the present disclosure. Therefore, any simple changes, equivalent variations and modifications made to the above embodiments according to the technical essence of the present disclosure without departing the content of the technical solutions of the present disclosure fall within the protection scope of the technical solutions of the present disclosure.

## Claims

1. A method for controlling an on-board charger, wherein in the on-board charger, a transformer side of a controllable bridge-type AC/AC conversion circuit is connected to an alternating-current side of a controllable bridge-type AC/DC conversion circuit through a transformer, and the method for controlling the on-board charger comprises:
regulating a reference peak value of a grid-side current of the on-board charger based on a deviation of a sampled value of a battery-side voltage relative to a reference value of the battery-side voltage;
converting the reference peak value of the grid-side current into an instantaneous reference value of the grid-side current based on a phase of an instantaneous sampled value of the grid-side voltage of the on-board charger;
performing phase-shift control on the two conversion circuits based on the instantaneous reference value of the grid-side current, the instantaneous sampled value of the grid-side voltage and the sampled value of the battery-side voltage, wherein the phase-shift control is for controlling power components in the two conversion circuits to achieve soft switching; and
correcting the phase-shift control based on a deviation of the instantaneous sampled value of the grid-side current relative to the instantaneous reference value of the grid-side current.

2. The method for controlling the on-board charger according to claim 1, wherein the phase-shift control comprises:
determining a phase-shift angle of an output voltage of the transformer side of the AC/AC conversion circuit and a phase-shift angle of an output voltage of the alternating-current side of the AC/DC conversion circuit based on the instantaneous reference value of the grid-side current, the instantaneous sampled value of the grid-side voltage, the sampled value of the battery-side voltage, a switching frequency of the on-board charger and an equivalent total reactance of all passive components in the on-board charger;
generating respective drive signals for the two conversion circuits based on the two phase-shift angles; and
driving the two conversion circuits to perform power conversion based on the respective drive signals for the two conversion circuits.

3. The method for controlling the on-board charger according to claim 2, wherein the determining a phase-shift angle of an output voltage of the transformer side of the AC/AC conversion circuit and a phase-shift angle of an output voltage of the alternating-current side of the AC/DC conversion circuit comprises:
determining the phase-shift angle of the output voltage of the transformer side of the AC/AC conversion circuit and a relationship between the two phase-shift angles based on the instantaneous reference value of the grid-side current, the instantaneous sampled value of the grid-side voltage, the sampled value of the battery-side voltage, the switching frequency of the on-board charger and the equivalent total reactance of all the passive components in the on-board charger, wherein the phase-shift angle of the output voltage of the transformer side of the AC/AC conversion circuit is within a range for controlling the power components in the two conversion circuits to achieve the soft switching; and
determining the phase-shift angle of the output voltage of the alternating-current side of the AC/DC conversion circuit based on the phase-shift angle of the output voltage of the transformer side of the AC/AC conversion circuit and the relationship between the two phase-shift angles.

4. The method for controlling the on-board charger according to claim 1, wherein the correcting the phase-shift control based on a deviation of the instantaneous sampled value of the grid-side current relative to the instantaneous reference value of the grid-side current comprises:
correcting at least one of phase-shift angles in the phase shift control.

5. The method for controlling the on-board charger according to any one of claims 1 to 4, wherein the reference value of the battery-side voltage is equal to a charging voltage of a battery connected to the on-board charger under a constant voltage trickle charging condition.

6. The method for controlling the on-board charger according to any one of claims 1 to 4, wherein the regulating a reference peak value of a grid-side current of the on-board charger based on a deviation of a sampled value of a battery-side voltage relative to a reference value of the battery-side voltage comprises:
regulating a reference value of a battery-side current based on the deviation of the sampled value of the battery-side voltage relative to the reference value of the battery-side voltage; and
regulating the reference peak value of the grid-side current based on a deviation of a sampled value of the battery-side current relative to the reference value of the battery-side current.

7. The method for controlling the on-board charger according to claim 6, wherein the reference value of the battery-side current is less than or equal to a charging current of a battery connected to the on-board charger under a constant current charging condition.

8. The method for controlling the on-board charger according to claim 7, wherein the charging current of the battery under the constant current charging condition is determined based on an operating state of the on-board charger and a user instruction.

9. An on-board charger, comprising:
a controller;
a transformer;
at least one passive component;
a controllable bridge-type AC/AC conversion circuit; and
a controllable bridge-type AC/DC conversion circuit, wherein
a transformer side of the AC/AC conversion circuit is connected to an alternating-current side of the AC/DC conversion circuit through the transformer; a grid side of the AC/AC conversion circuit serves as a grid side of the on-board charger, and a direct-current side of the AC/DC conversion circuit serves as a battery side of the on-board charger;
a primary side and/or a secondary side of the transformer is provided with the at least one passive component, and each of the at least one passive component at least comprises an inductor; and
both the AC/AC conversion circuit and the AC/DC conversion circuit are controlled by the controller, and the controller is configured to perform the method for controlling the on-board charger according to any one of the claims 1 to 8.

10. The on-board charger according to claim 9, wherein
the AC/AC conversion circuit is implemented by a half-bridge topology or a full-bridge topology; and
the AC/DC conversion circuit is implemented by a half-bridge topology or a full-bridge topology.

11. The on-board charger according to claim 9, wherein the at least one passive component comprises an inductor branch, and the inductor branch comprises at least one inductor,
in response to the number of the at least one inductor being greater than 1, the inductors are connected in series, connected in parallel, or connected in series and parallel.

12. The on-board charger according to claim 11, wherein the at least one passive component further comprises a capacitor branch, and the capacitor branch is connected in series or connected in parallel with the inductor branch, wherein,
the capacitor branch comprises at least one capacitor, and
in response to the number of the at least one capacitor is greater than 1, the capacitors are connected in series, connected in parallel, or connected in series and parallel.

13. The on-board charger according to any one of claims 9 to 12, wherein a switching frequency of the on-board charger is greater than a resonant frequency of a resonant cavity in the on-board charger.

14. The on-board charger according to any one of claims 9 to 12, further comprising two filters, wherein
one of the two filters is arranged at the grid side of the AC/AC conversion circuit, and the other filter is arranged at the direct-current side of the AC/DC conversion circuit.
